# EUROPÄISCHE PATENTSCHRIFT

(11) **EP 2 468 975 B1**
(45) Veröffentlichungstag und Bekanntmachung des Hinweises auf die Patenterteilung: **16.09.2015**
(21) Anmeldenummer: 11010012.0
(22) Anmeldetag: 20.12.2011
(51) Int. Cl.: E04B 9/30, B64C 1/06

(54) **Verkleidung**
Cladding
Revêtement

(30) Priorität: 21.12.2010 DE 102010055462
(43) Veröffentlichungstag der Anmeldung: 27.06.2012
(73) Patentinhaber: Greiner & Gutmann GbR, 70771 Oberaichen (DE)
(72) Erfinder: Greiner, Swibert, Dr., 70771 Oberaichen (DE)
(74) Vertreter: Schiffer, Axel Martin

(56) Entgegenhaltungen:
- EP-A- 0 584 730
- EP-A- 1 452 397
- DE-A1- 2 825 173
- DE-A1- 3 631 351
- DE-A1-102005 035 174
- FR-A- 1 518 396
- FR-A1- 2 753 218
- US-A- 5 301 447
- US-A- 5 647 155

## Beschreibung

Die vorliegende Erfindung betrifft eine Verkleidung für Flächen, insbesondere Decken oder Wände, nach dem Oberbegriff des Anspruchs 1.

Eine derartige Verkleidung umfasst mindestens zwei Rahmenprofile, welche sich entlang einer Längsrichtung an der zu verkleidenden Fläche beabstandet zueinander erstrecken, mindestens ein Membranelement mit einer Sichtseite und einer der Sichtseite abgewandten Rückseite, das zwischen den Rahmenprofilen angeordnet und mit den Rahmenprofilen mindestens teilweise mit Hilfe von hintergreifenden Verbindungsmitteln verbunden ist, wobei das Membranelement in einem ungespannten Zustand entlang der Längsrichtung frei bewegbar, insbesondere frei in einen Zwischenraum zwischen die Rahmenprofile einführbar und aus diesem entfernbar ist, und Mittel zum Spannen des Membranelements in einer Querrichtung zwischen den Rahmenprofilen.

Eine solche Verkleidung ist aus DE 10 2005 035 174 A1 bekannt.

EP 1 452 397 A1 offenbart eine Verkleidung gemäß des einleitenden Teils des ersten Anspruchs.

EP 0 584 730 A1 beschreibt eine Verkleidung einer Decke, an welcher Wärmetauscher und Wärmedämmplatten zur Isolierung der Decke angeordnet sind.

Aus DE 36 31 351 A1 geht ein Spannrahmen für eine Unterdecke hervor, die an ihrer Sichtfläche mit Stoff bespannt ist, insbesondere zur Montage an Innenraumdecken von Gebäuden.

Eine Vorrichtung zum Isolieren von Verschmutzungszonen ist in FR 2 753 218 beschrieben.

US 5,647,155 beschreibt eine Vorrichtung zum Spannen und Sichern der Kanten einer flexiblen Anzeigetafel an einem Rahmen oder Gehäuse.

Aus FR 1 518 396 ist eine Zwischendecke mit einem Reißverschluss bekannt.

Als eine **Aufgabe** der Erfindung kann angesehen werden, eine Verkleidung zu schaffen, die bei hoher Funktionalität einen ansprechenden Raumabschluss bietet und außerdem wartungsarm ist.

Die Aufgabe wird durch eine Verkleidung mit den Merkmalen des Anspruchs 1 gelöst. Vorteilhafte Ausführungsformen und Varianten der erfindungsgemäßen Verkleidung sind in den abhängigen Ansprüchen angegeben und werdenaußerdem in der folgenden Beschreibung, insbesondere im Zusammenhang mit den Figuren, erläutert.

Bei der Verkleidung ist vorgesehen, dass zum Schutz des Membranelements, insbesondere vor Verschmutzung, an der Rückseite mindestens eine formstabile Abdeckhaube angeordnet ist.

Ein erster Grundgedanke der Erfindung ist darin zu sehen, als Verkleidung ein integriertes System zu schaffen, das an einer Sichtseite ein flexibles Membranelement und an einer Rückseite eine starre Abdeckhaube umfasst.

Durch das an der Sichtseite angeordnete Membranelement, das beispielsweise eine textile Membran aufweisen kann, kann ein ansprechender und als angenehm empfundener optischer und haptischer Raumabschluss bereitgestellt werden. In einem Montagezustand der Verkleidung ist das Membranelement zwischen den Rahmenprofilen gespannt. Durch die Spannung widersteht das Membranelement Beanspruchungen, beispielsweise durch Berührung oder kollidierende Gegenstände.

Die Abdeckhaube erhöht dabei den Schutz einerseits für Personen, die bei etwaigen Turbulenzen gegen die Decke geschleudert werden und andererseits schützt sie auch empfindliche Bauteile an der Innenseite des Rumpfes vor Schäden durch Kollisionen.

Das Membranelement erstreckt sich vorzugsweise als Einheit ohne Stöße oder Segmentierungen über die gesamte Breite und Länge der zu verkleidenden Fläche. In einer bevorzugten Ausgestaltung weist das Membranelement eine Breite von etwa bis zu 1,50 m und eine Länge von mehr als 20 m auf.

Ein weiterer Grundgedanke der Erfindung kann darin gesehen werden, das gegebenenfalls schmutz- und/oder wasserempfindliche Membranelement von seiner Rückseite her zu schützen.

Durch die erfindungsgemäße Abdeckhaube kann das Membranelement insbesondere vor Verschmutzung durch Staub geschützt werden. Weiterhin kann die Abdeckhaube die Membran auch vor Wassertropfen aus Kondensat, welches sich an der zu verkleidenden Fläche bilden kann, schützen. Eine solche Kondensatbildung kann beispielsweise an einer zu verkleidenden Innenfläche eines Passagierflugzeugs auftreten. Durch die an der Rückseite des Membranelements vorgesehene Abdeckhaube wird es somit möglich, eine textile Membran als Verkleidung, insbesondere als Deckenverkleidung, in einem Passagierflugzeug einzusetzen.

Unter einer formstabilen Abdeckhaube wird insbesondere eine im Wesentlichen starre oder steife Haube verstanden, die im Vergleich zu dem Membranelement eine sehr geringe oder keine Flexibilität aufweist.

Dadurch, dass die Abdeckhaube als formstabile Abdeckhaube ausgeführt ist, kann diese neben dem genannten Schutzzweck auch eine Reihe von weiteren Funktionen übernehmen und insbesondere als Träger für verschiedene Elemente wie Leuchtmittel oder Reflektoren dienen. Die Verkleidung bietet damit eine hohe Funktionalität in Bezug auf verschiedene zusätzliche Aspekte neben der reinen Abdeckung der zu verkleidenden Fläche. Die erfindungsgemäße Verkleidung kann daher als integrierte Lösung wesentlich kompakter verschiedene Funktionen vereinen, als dies bei Einzelkomponenten der Fall wäre.

Insbesondere für den Einsatz in der Luftfahrt kann die Abdeckhaube aus einer Leichtbauschale bestehen, zum Beispiel in Verbundbauweise mit Waben aus Aramid oder Aluminium als Kernmaterial.

Für eine optisch besonders ansprechende Verkleidung weist die Abdeckhaube in einer bevorzugten Ausgestaltung mindestens ein Leuchtmittel, vorzugsweise mehrere Leuchtmittel, auf. Die Leuchtmittel sind vorzugsweise an einer dem Membranelement zugewandten Seite der Abdeckhaube angeordnet und können so die Membran von ihrer Rückseite her beleuchten. Bei den Leuchtmitteln kann es sich insbesondere um flächig angeordnete Leuchtdioden handeln. Diese können monochrom oder als RGB-Strahler (Rot-Grün-Blau-Strahler) ausgebildet sein. Insbesondere bei farbigen Leuchtmitteln wie RGB-Strahlern können leuchtende Farben auf das Membranelement projiziert werden.

Durch eine solche Hinterleuchtung des Membranelements kann auf der Sichtseite eine gleichmäßige Beleuchtung bereitgestellt werden. Das Membranelement weist hierzu vorzugsweise lichttechnische Materialien, insbesondere ein lichttechnisches Gewebe auf, das durchscheinendes Licht einerseits gut streut und andererseits trotzdem gut hindurch lässt. Hierbei ist eine Transmission von 70 bis 90 %, insbesondere etwa 80 %, vorteilhaft Das lichttechnische Material ist vorzugsweise undurchsichtig.

In einer weiteren bevorzugten Ausgestaltung weist die Abdeckhaube mindestens einen Reflektor auf. Der Reflektor ist vorzugsweise an einer dem Membranelement zugewandten Seite der Abdeckhaube angeordnet oder durch die Abdeckhaube selbst, zum Beispiel bei einer Ausführung aus Aluminium, gebildet. Der Reflektor kann verspiegelte Flächen aufweisen. Durch den Reflektor kann seitlich eingestrahltes Licht, beispielsweise durch seitlich angebrachte Leuchtmittel, in Richtung des Membranelements reflektiert werden. In einer bevorzugten Variante weist der Reflektor eine gestufte Reflektorfläche auf, um seitlich einfallendes Licht gleichmäßig auf das Membranelement zu reflektieren.

Die Einsatzmöglichkeiten der Verkleidung können weiter dadurch gesteigert werden, dass die Abdeckhaube mindestens einen Kühlkörper aufweist. Insbesondere kann die Abdeckhaube selbst den Kühlkörper bilden. Der Kühlkörper kann insbesondere dazu dienen, Wärme von Leuchtmitteln, die gegebenenfalls an oder in der Nähe der Abdeckhaube angeordnet sind, abzuleiten.

In einer weiteren vorteilhaften Ausgestaltung weist die Abdeckhaube eine schallabsorbierende Beschichtung auf. Diese kann, insbesondere in Verbindung mit einem schallabsorbierenden Gewebe des Membranelements, zu einer effektiven Schallreduzierung führen.

Das Membranelement kann in dem ungespannten Zustand weitgehend kräftefrei oder lose entlang der Rahmenprofile bewegt werden. Hierzu ist es nach der Erfindung bevorzugt, dass die hintergreifenden Verbindungsmittel durch eine Kederverbindung gebildet sind. Dabei kann das Membranelement beispielsweise zumindest an seinen Längsseiten jeweils einen Keder, also eine Randverstärkung, aufweisen, welcher mit einer in den Rahmenprofilen ausgebildeten Kedernut koppelbar ist. Die randseitigen Keder des Membranelements sind vorzugsweise entlang der Längsrichtung des Membranelements in die Kedernuten einführbar.

In einer weiteren bevorzugten Ausgestaltung weist das Membranelement auch an den Querseiten entsprechende Keder zum Einführen in quer angeordnete Kedernuten auf.

Bei einer weiteren bevorzugten Variante der Erfindung ist die Abdeckhaube an den Rahmenprofilen befestigt. Die Befestigung erfolgt vorzugsweise in regelmäßigen Abständen entlang der Längsachse der Verkleidung. Durch die Befestigung der Abdeckhaube direkt an den Rahmenprofilen kann eine separate Befestigung der Abdeckhaube an der zu verkleidenden Fläche unterbleiben. Die Verkleidung bildet somit eine Einheit, die einfach und mit grundsätzlich wenigen Befestigungsmitteln an der zu verkleidenden Fläche angebracht werden kann.

In einer vorteilhaften Weiterbildung der Erfindung ist vorgesehen, dass Befestigungselemente vorhanden sind, mit welchen die Rahmenprofile an einer Montagebasis befestigbar sind. Die Verkleidung kann somit, insbesondere ausschließlich, über die Rahmenprofile an der Montagebasis aufgehängt werden.

Spannkräfte, welche von dem gespannten Membranelement auf die Rahmenprofile übertragen werden, können bei einer weiteren bevorzugten Alternative der Erfindung über die Befestigungselemente in die Montagebasis eingeleitet werden. Die Abdeckhaube kann bei dieser Ausführungsform weitgehend von Spannkräften entlastet werden, so dass an diese keine besonderen Stabilitäts- oder Steifigkeitsanforderungen gestellt werden müssen.

In einer alternativen Ausgestaltung ist vorgesehen, dass Spannkräfte, welche von dem gespannten Membranelement auf die Rahmenprofile übertragen werden, in die Abdeckhaube einleitbar sind. Der Vorteil dieser Lösung liegt darin, dass die Spannkräfte des Membranelements über die Abdeckhaube abgetragen werden können. Die Montagebasis, beispielsweise die Flugzeugstruktur, an der die Verkleidung angebracht sein kann, muss nur noch die Kräfte aus Eigengewicht und Massenkräfte tragen. Die Montagebasis, beziehungsweise die Flugzeugstruktur, wird somit entlastet.

Insbesondere bei größeren Längen der Verkleidung kann die Abdeckhaube mehrere Haubensegmente umfassen, die insbesondere formschlüssig miteinander verbunden sein können. An den Randbereichen der einzelnen Haubensegmente können beispielsweise Aufkantungen vorgesehen sein, die jeweils formschlüssig miteinander verbunden werden können. Zum Beispiel können die Aufkantungen so gestaltet sein, dass eine erste Aufkantung eines ersten Haubensegments eine zweite Aufkantung eines benachbarten, zweiten Haubensegments U-förmig überlappen kann. Hierdurch wird gewährleistet, dass die Fuge dicht ist gegen Staub und Kondenswasser. Die Aufkantungen geben der Abdeckhaube zudem steife Ränder.

Insbesondere bei langen Verkleidungen ist es weiterhin bevorzugt, dass die Rahmenprofile jeweils mehrere Profilsegmente aufweisen, die, insbesondere im Bereich eines Momenten-Nullpunkts der Rahmenprofile, miteinander verbunden sind. Die Montagestöße der Profilsegmente werden also in den Momenten-Nullpunkten der als Durchlaufträger wirkenden Rahmenprofile angeordnet. In den Montagestößen müssen dann im Wesentlichen nur Querkräfte übertragen werden. Die Verbindung der einzelnen Profilsegmente miteinander kann beispielsweise durch Verschrauben, beispielsweise mit Blechlaschen, ausgeführt werden. Damit die in den Rahmenprofilen jeweils ausgebildete Kedernut im Montagestoß keinen Versatz aufweisen kann, sind die Blechlaschen vorzugsweise so ausgebildet, dass ein Formschluss erzwungen wird.

Das Membranelement ist vorzugsweise in zwei Raumrichtungen spannbar. Durch das zweiachsige Spannen des Membranelements kann das Membranelement auftretenden Lasten federnd widerstehen und nach Entfernen einer Last wieder in die ursprüngliche Form zurückgehen. Zudem kann ein faltenfreies und glattes Membranelement bereitgestellt werden. Für das zweiachsige Spannen weist die Verkleidung vorzugsweise Mittel zum Spannen des Membranelements in Längsrichtung und Mittel zum Spannen des Membranelements in Querrichtung auf.

Ein besonders einfaches Spannen des Membranelements in Querrichtung kann dadurch erzielt werden, dass das Membranelement als Mittel zum Spannen mindestens einen Reißverschluss aufweist, welcher sich entlang der Längsrichtung erstreckt, und dass das Membranelement durch Schließen des Reißverschlusses von dem ungespannten Zustand in einen in Querrichtung gespannten Zustand und durch Öffnen des Reißverschlusses von einem in Querrichtung gespannten Zustand in den ungespannten Zustand überführbar ist.

Bei dieser Ausführungsform umfasst das Membranelement eine, insbesondere textile, Membran, zum Beispiel ein Gewebe, und mindestens einen Reißverschluss, welcher an der Membran befestigt ist. Der Reißverschluss weist ein erstes Verschlussband und ein zweites Verschlussband auf, die jeweils aus einem Gewebestreifen gebildet sein können. Das erste Verschlussband ist an der Membran befestigt, insbesondere angeschweißt, angeklebt oder mit dieser vernäht. An dem zweiten Verschlussband ist ein Keder befestigt. Der Keder kann aus einem Kunststoff bestehen und ist vorzugsweise auf das zweite Verschlussband aufgespritzt. Das Aufspritzen kann während der Herstellung des Reißverschlusses erfolgen. Durch das Aufspritzen wird ein besonders fester Verbund zwischen Verschlussband und Keder erzeugt, der den auftretenden Spannkräften standhält. Zudem erlaubt das Aufspritzen die Einhaltung sehr geringer Toleranzen.

Zusätzlich zu der Möglichkeit, das Membranelement zu spannen, wird durch den Reißverschluss ein einfacher Zugang zu der Abdeckhaube, beispielsweise zu Revisionszwecken oder zum Ein- oder Ausbau von Leuchtmitteln, ermöglicht. Für ein vollständiges Entfernen der Membran ist es vorteilhaft, wenn mindestens an beiden Längsseiten der Membran jeweils mindestens ein Reißverschluss vorgesehen ist.

Zum Spannen des Membranelements in Längsrichtung kann das Membranelement auch an den Querseiten jeweils mindestens einen Reißverschluss aufweisen. In einer vorteilhaften Ausgestaltung des Membranelements weist dieses demnach in Längsrichtung und in Querrichtung jeweils mindestens einen Reißverschluss auf. Weiter bevorzugt ist an allen Randseiten des Membranelements jeweils mindestens ein Reißverschluss angeordnet.

Das Spannen des Membranelements wird dadurch erleichtert, dass um den Reißverschluss herum ein Verbindungsstreifen angeordnet ist, durch welchen bei geöffnetem Reißverschluss eine Klaffung des Reißverschlusses begrenzt wird. Mit anderen Worten sorgt der Verbindungsstreifen dafür, dass trotz geöffnetem Reißverschluss ein vollständiges, also beliebig weites Trennen der Verschlussbänder voneinander verhindert wird. Über den Verbindungsstreifen bleibt die Membran auch bei geöffnetem Reißverschluss mit dem zweiten Verschlussband verbunden. Durch die Begrenzung des Abstands der beiden Verschlussbänder zueinander kann der Reißverschluss einfacher geschlossen werden. Der Verbindungsstreifen ist vorzugsweise an beiden Verschlussbändern befestigt, beispielsweise auf diese aufgeschweißt, aufgeklebt oder mit diesen vernäht. Der Verbindungsstreifen kann als Stoffstreifen ausgeführt sein. Bei der Montage sorgt der Verbindungsstreifen dafür, dass die Membran bei geöffnetem Reißverschluss in schlaffem Zustand leicht eingefädelt werden kann.

Der gewünschte Effekt des Verbindungsstreifens, die Begrenzung des Abstandes der beiden Verschlussbänder, kann auch erzielt werden, indem der geschlossene Reißverschluss derart angenäht wird, dass die Membran eine Aufwölbung entlang des Reißverschlusses erfährt, die derjenigen des Verbindungsstreifens entspricht. Statt eines separaten Verbindungsstreifens kann der gewünschte Effekt also durch eine spezielle Befestigung des Spann-Reißverschlusses auf der Membran erzielt werden. Hierbei weist die Membran im befestigten Zustand eine Aufwölbung auf, die parallel zum Spann-Reißverschluss verläuft. Der Verbindungsstreifen und die Membran können also ein und dasselbe Materialstück sein. Verbindungsstreifen und Membran können demnach einstückig oder integral ausgebildet sein. Der Verbindungsstreifen kann ein integraler Bestandteil der Membran sein.

In einer weiteren bevorzugten Ausgestaltung sind mindestens zwei Reißverschlüsse vorgesehen, wobei die Reißverschlüsse so zueinander angeordnet sind, dass durch Schließen eines ersten Reißverschlusses ein schlaffer, geschlossener oder ein vorgespannter Zustand und durch anschließendes Schließen eines zweiten Reißverschlusses der gespannte Zustand des Membranelements einstellbar ist. An der Stelle des oben genannten Verbindungsstreifens befindet sich also ein weiterer Reißverschluss, welcher als erster Reißverschluss bezeichnet ist. Bei geschlossenem ersten Reißverschluss und geöffnetem zweiten Reißverschluss wird ein Abstand der Verschlussbänder des zweiten Reißverschlusses zueinander begrenzt.

Die genannten zwei Reißverschlüsse befinden sich vorzugsweise jeweils an ein und demselben Rand- oder Mittenbereich des Membranelements und können auch als Doppelreißverschluss bezeichnet werden. Die beiden Reißverschlüsse sind zueinander quer zur Fläche der Membran angeordnet. Es liegt also maximal einer der Reißverschlüsse in der Ebene der Membran, während sich der zweite Reißverschluss außerhalb der Membranebene befindet.

Das Membranelement lässt sich dabei weitgehend kräftefrei oder lose in die Kedernuten der Rahmenprofile einführen, wenn der erste Reißverschluss geschlossen und der zweite Reißverschluss geöffnet ist. Dabei klafft zwischen den Verschlussbändern des zweiten Reißverschlusses eine Lücke mit einer durch den ersten Reißverschluss begrenzten Breite. Nach Einführen des Membranelements in die Kedernuten kann dieses durch Schließen des zweiten Reißverschlusses einfach gespannt werden.

Durch den anstelle des Verbindungsstreifens vorgesehenen Reißverschluss werden die Vorteile eines einfachen Spannens und eines einfachen Zugangs zu der Abdeckhaube miteinander kombiniert. Durch die beiden Reißverschlüsse wird somit einerseits ein besonders einfaches Spannen ausgehend von dem geschlossenen ersten Reißverschluss als auch ein einfacher Zugang zu der Abdeckhaube und weiteren dahinter liegenden Bauteilen durch Öffnen beider Reißverschlüsse bereitgestellt. Durch den Reißverschluss oder die Reißverschlüsse ist es grundsätzlich möglich, die Membran ohne Bewegung der Rahmenprofile zu spannen. Die Rahmenprofile können somit als fixierte, also im Wesentlichen unbewegliche Randelemente ausgeführt sein. Es ist aber auch möglich, zur Unterstützung und Verstärkung der Spannung die Rahmenprofile quer verschieblich zu ihrer Längsachse auszubilden. Eine derartige Verschieblichkeit kann durch eine geeignete Lagerung und Befestigung der Rahmenprofile gewährleistet werden.

In einer weiteren bevorzugten Ausführungsform der Erfindung ist daher vorgesehen, dass die Mittel zum Spannen des Membranelements mindestens ein Justiermittel aufweisen, mit welchem mindestens eines der Rahmenprofile in der Querrichtung verschiebbar ist. Das Membranelement kann demnach alternativ oder zusätzlich dadurch gespannt werden, dass der Abstand zwischen den Rahmenprofilen vergrößert wird. Die Justiermittel können auch dazu verwendet werden, das gespannte Membranelement zu justieren.

Die Abdeckhaube umfasst vorzugweise ein gewelltes Blech oder einen Rahmen, welcher mit einer Folie bespannt ist. Die Abdeckhaube weist vorzugsweise eine gewölbte Oberseite auf, damit Wasser seitlich abgeleitet werden kann. Seitenränder der Abdeckhaube sind vorzugsweise als Abtropfkanten ausgebildet.

Die Erfindung wird nachfolgend anhand von bevorzugten Ausführungsbeispielen, welche in den beigefügten schematischen Zeichnungen dargestellt sind, weiter beschrieben. In den Zeichnungen zeigt:
- Fig. 1: eine perspektivische Ansicht einer ersten Ausführungsform einer erfindungsgemäßen Verkleidung;
- Fig. 2: eine Vorderansicht der ersten Ausführungsform;
- Fig. 3: eine perspektivische Detailansicht von außen der ersten Ausführungsform;
- Fig. 4: eine perspektivische Detailansicht von innen der ersten Ausführungsform;
- Fig. 5: eine perspektivische Ansicht einer zweiten Ausführungsform einer erfindungsgemäßen Verkleidung;
- Fig. 6: eine Vorderansicht der zweiten Ausführungsform;
- Fig. 7: eine perspektivische Detailansicht von außen der zweiten Ausführungsform;
- Fig. 8: eine perspektivische Detailansicht von innen der zweiten Ausführungsform;
- Fig. 9: eine perspektivische Ansicht einer dritten Ausführungsform einer erfindungsgemäßen Verkleidung;
- Fig. 10: eine Vorderansicht einer vierten Ausführungsform einer erfindungsgemäßen Verkleidung;
- Fig. 11: einen Detailausschnitt der vierten Ausführungsform;
- Fig. 12: eine Aufsicht auf ein Membranelement und ein Rahmenprofil bei geöffneten Reißverschlüssen;
- Fig. 13: eine Querschnittsansicht eines Membranelements mit geöffnetem Reißverschluss;
- Fig. 14: eine Aufsicht auf ein Membranelement und ein Rahmenprofil bei geschlossenen Reißverschlüssen;
- Fig. 15: eine Querschnittsansicht eines Membranelements mit geschlossenem Reißverschluss;
- Fig. 16: eine Querschnittsansicht eines Membranelements mit einem Doppelreißverschluss in teilweise geöffneter und geschlossener Stellung;
- Fig. 17: eine Querschnittsansicht eines Membranelements mit einem Reißverschluss und einem Verbindungsstreifen in geöffneter und geschlossener Stellung;
- Fig. 18: eine Aufsicht auf eine Verkleidung mit in zwei Richtungen gespanntem Membranelement;
- Fig. 19: ein Eckdetail aus Fig. 18;
- Fig. 20: eine Abdeckhaube mit einem gewellten Blech und
- Fig. 21: eine Abdeckhaube mit einem mit einer Folie bespannten Rahmen eine nicht beanspruchten Verkleidung.

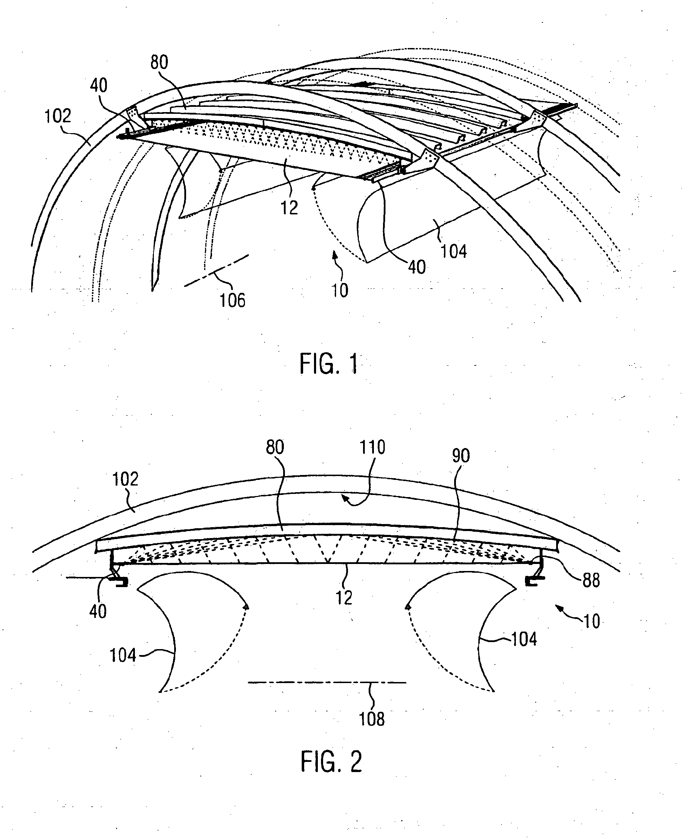

Eine erste Ausführungsform einer erfindungsgemäßen Verkleidung 10 ist in den Figuren 1 bis 4 dargestellt. Die Verkleidung 10 ist im Innenraum eines Flugzeugs an der Decke eines Passagierraumes angeordnet, welche eine zu verkleidende Fläche 110 darstellt. Bei der in den Figuren 1 bis 4 dargestellten Ausführungsform ist die Verkleidung 10 an einem gegebenenfalls bereits vorhandenen Auflager einer auszutauschenden Flugzeugdecke an Gepäckfächern 104 des Flugzeugs befestigt.

Äquivalente Komponenten sind in allen Figuren mit denselben Bezugszeichen versehen.

Die Verkleidung 10 umfasst als wesentliche Komponente ein Membransystem mit zwei gegenüberliegend und parallel zueinander angeordneten Rahmenprofilen 40, zwischen denen ein Membranelement 12 gespannt ist. Des Weiteren umfasst die Verkleidung 10 eine neben und im Wesentlichen parallel zu dem Membranelement 12 angeordnete flache Abdeckhaube 80.

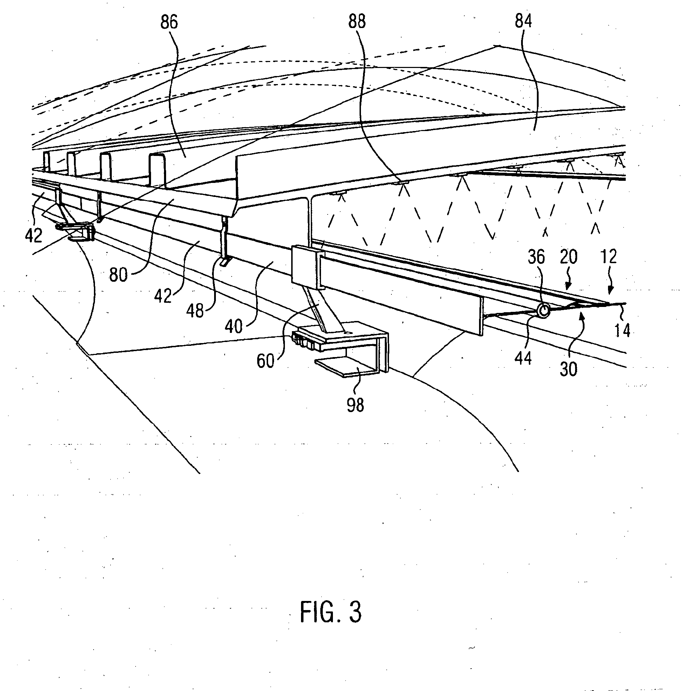

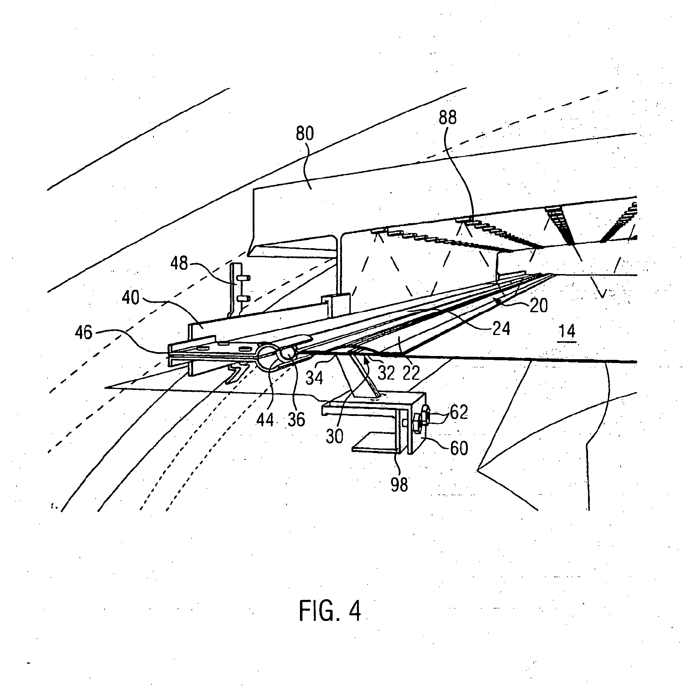

Die Rahmenprofile 40 weisen jeweils einen T-förmigen Querschnitt mit einem Quersteg und einem zentralen Längssteg auf, wie insbesondere in den Figuren 3 und 4 erkennbar. Am Ende des zentralen Längsstegs des T-förmigen Rahmenprofils 40 ist als hintergreifende Profilierung eine Kedernut 44 vorgesehen. Die Rahmenprofile 40 und die Kedernuten 44 erstrecken sich entlang einer Längsrichtung 106 der Verkleidung 10 und des Flugszeugs können auch als Profilschienen oder Kederschienen bezeichnet werden. Die Elemente in Querrichtung können analog ausgeführt werden.

Die Rahmenprofile 40 sind in regelmäßigen Abständen mittels Befestigungselementen 60 an der zu verkleidenden Fläche, insbesondere an einer Montagebasis 98, befestigt. Die Montagebasis 98 ist durch mehrere Lagerelemente gebildet, die unterhalb der Verkleidung angeordnet sind und das Auflager für die Verkleidung 10 bilden.

Die Rahmenprofile 40 sind nur in einem Punkt in Längsrichtung fixiert an der Montagebasis 98 und/oder den Befestigungselementen 60 aufgelagert und im Übrigen entlang in Längsrichtung 106 gleitend gelagert. Hierdurch wirken sich Längenänderungen des Flugzeugrumpfes, die bei verschiedenen Flugbedingungen auftreten können, nicht belastend auf die Rahmenprofile 40 aus.

In Bezug auf gegebenenfalls bestehende beengte Verhältnisse bei der Montage kann es sinnvoll sein, die Länge der Rahmenprofile 40 zu begrenzen. Die Rahmenprofile 40 sind daher in eine Mehrzahl von Profilsegmenten 42 unterteilt, die zum Bilden des gesamten Rahmenprofils 40 miteinander fluchtend verbunden sind. Entstehende Montagestöße sind vorzugsweise in den Momenten-Nullpunkten der als Durchlaufträger wirkenden Rahmenprofile 40 angeordnet. Zum Verbinden der einzelnen Profilsegmente 42 sind Verbindungselemente 46 vorgesehen. Die Verbindungselemente 46 sind so gestaltet, dass eine formschlüssige Verbindung der Profilsegmente 42 erzwungen wird. Hierdurch wird ein Versatz der Profilsegmente 42 verhindert.

Die Verbindungselemente 46 umfassen jeweils zwei Verbindungsplatten, die parallel zueinander angeordnet sind und zwischen denen die Profilsegmente 42 eingeklemmt werden können. Die Verbindungselemente 46 weisen ebenfalls eine nutartige Vertiefung auf, die sich um die Kedernut 44 des Rahmenprofils 40 erstreckt.

Das Membranelement 12 umfasst eine textile Membran 14 und einen einfachen oder doppelten an den Längsrändern der Membran angeordneten Reißverschluss 30. Zur Befestigung des Membranelements 12 an den Rahmenprofilen 40 ist an den seitlichen Randbereichen des Membranelements 12 jeweils ein Keder 36 vorgesehen, welcher entlang der Längsrichtung 106 in die Kedernuten 44 der Rahmenprofile 40 eingeführt werden kann.

Die Reißverschlüsse 30 erstrecken sich entlang der Längsrichtung 106 der Verkleidung und des Membranelements 12 und parallel zu dem Keder 36. Zum Spannen des Membranelements 12 beziehungsweise der Membran 14 können die Reißverschlüsse 30 geschlossen und zum Entspannen geöffnet werden. Die Reißverschlüsse 30 weisen jeweils ein erstes Verschlussband 32 und ein zweites Verschlussband 34 auf. Das erste Verschlussband 32 ist mit der Membran 14 fest verbunden. Der Keder 36 zum Einführen in die Kedernut 44 ist an dem zweiten Verschlussband 34 befestigt.

Die Reißverschlüsse 30 ermöglichen einen einfachen Einbau, ein Schließen und Öffnen des Membranelements 12 und zudem das Spannen des Membranelements 12, welches simultan mit dem Schließen erfolgt. Gleichzeitig sorgt der Keder 36 mit den Gleitbewegungen in der Kedernut 44 dafür, dass ein gleichmäßiges zweiachsiges Spannen erfolgen kann. Mit dem Spannen in zwei Richtungen sind unvermeidlich auch Dehnungsbewegungen in zwei Richtungen verbunden, die sich auch an den Rändern ausbilden müssen, um den gewünschten zweiachsigen Spannungszustand zu erzielen.

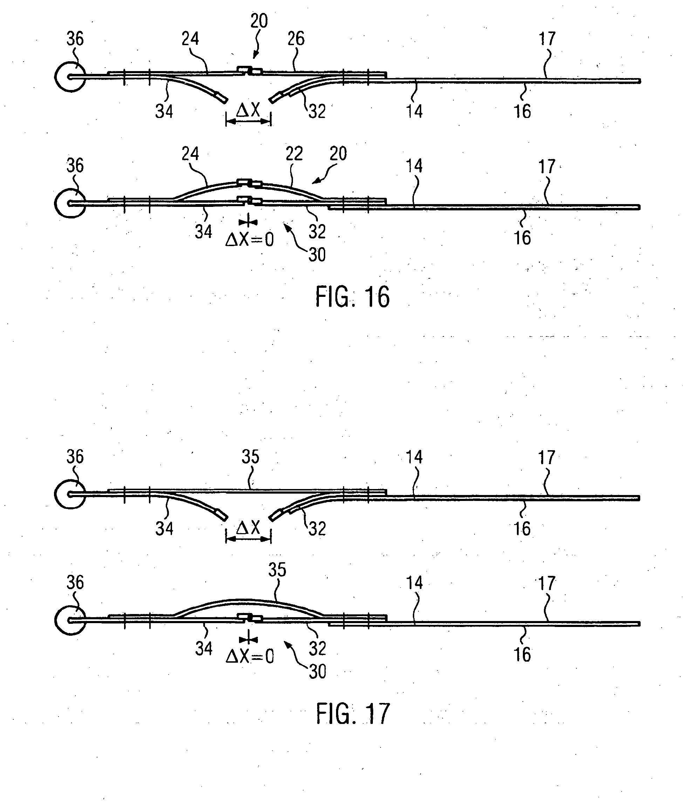

Bei der dargestellten Ausführungsform sind an jeder der Längsseiten der Membran 14 jeweils zwei Reißverschlüsse 20, 30 angeordnet. Die Reißverschlüsse 20, 30 können insgesamt auch als Doppelreißverschluss bezeichnet werden. Die Reißverschlüsse 20, 30 sind in Richtung der Membranfläche nicht hintereinander, sondern neben- beziehungsweise übereinander angeordnet. Details des Doppelreißverschlusses sind in Fig. 16 dargestellt.

Ein erster Reißverschluss 20 weist ein erstes Verschlussband 22 und ein zweites Verschlussband 24 auf. Der erste Reißverschluss 20 definiert eine maximale Breite des Membranelements 12, die ein einfaches Einfädeln oder Einziehen in die Kedernuten 44 ohne Querspannungen erlaubt. Bei geschlossenem ersten Reißverschluss 20 und geöffnetem zweiten Reißverschluss 30 ist das Membranelement 12 weitgehend schlaff, befindet sich also in einem ungespannten oder nur leicht gespannten Zustand. Dabei besteht eine Klaffung Δx zwischen den Verschlussbändern 32, 34 des zweiten Reißverschlusses 30. Das Membranelement 12 kann in diesem Zustand somit besonders einfach durch Einführen der Keder 36 in die Kedernuten 44 an den Rahmenprofilen 40 befestigt werden. Die Klaffung Δx liegt vor dem Spannen typischerweise im Bereich von ca. 0,5 bis 1,0 % der Breite des Membranelements.

Nach dem Einziehen und gegebenenfalls nach dem Aufbringen einer Längsvorspannung wird die Klaffung durch Schließen des zweiten Reißverschlusses 30 entfernt und hierdurch wird das Membranelement 12 beziehungsweise die Membran 14 gespannt. Der zweite Reißverschluss 30 ist im Vergleich zu dem ersten Reißverschluss 20 so angeordnet, dass der erste Reißverschluss 20 bei Schließen des zweiten Reißverschlusses 30 entlastet wird. Dabei kann sich der erste Reißverschluss 20 aufwölben, wie den Figuren, insbesondere Fig. 16, zu entnehmen ist.

Zu Revisionszwecken können beide Reißverschlüsse geöffnet und wieder geschlossen werden. Der erste Reißverschluss 20 kann auch als Zugriffsverschluss und der zweite Reißverschluss 30 als Spannverschluss bezeichnet werden. Der erste Reißverschluss 20 ist auf den zweiten Reißverschluss 30 aufgebracht. Der zweite Reißverschluss 30 ist in den Keder 36 eingebettet und mit diesem zur Übertragung der Spannkräfte fest verbunden.

Eine weitere Ausführungsform eines Reißverschlusses ist in Fig. 17 dargestellt. Anstelle des Doppelreißverschlusses gemäß Fig. 16 ist ein Reißverschluss 30 vorgesehen, um den herum ein Verbindungsstreifen 35 angeordnet ist. Der Verbindungsstreifen 35 verbindet die beiden Verschlussbänder 32, 34 des Reißverschlusses 30. Durch den Verbindungsstreifen 35 wird die Klaffung Δx des geöffneten Reißverschlusses 30 begrenzt. Der Verbindungsstreifen 35 kann beispielsweise aus einem Textilstreifen bestehen, der mit den beiden Verschlussbändern 32, 34 fest verbunden ist. Der Verbindungsstreifen 35 kann hierzu beispielsweise aufgenäht oder angeschweißt sein. Wie in Fig. 17 dargestellt, ist der Verbindungsstreifen 35 vorzugsweise an einer Rückseite 17 des Membranelements 12 vorgesehen, damit er bei geschlossenem Reißverschluss 30 möglichst nicht sichtbar ist. Bei geschlossenem Reißverschluss 30 ist der Verbindungsstreifen schlaff beziehungsweise entspannt und kann sich gegenüber der Membranfläche aufwölben.

Derselbe Effekt kann auch durch ein entsprechendes Aufnähen der Membran 14 mit einer Wölbung über dem Spann-Reißverschluss 30 erfolgen. Statt des Verbindungsstreifens 35 kann also der Reißverschluss 30 direkt auf die oberhalb des Reißverschlusses 30 vorgewölbte Membran 14 aufgenäht werden.

In dem dargestellten Ausführungsbeispiel sind zum weiteren Spannen und/oder zum Justieren der Spannung des Membranelements 12 Justiermittel 62 vorgesehen, mit welchen zumindest eines der Rahmenprofile 40 in einer Querrichtung 108 bewegt werden kann. Durch Betätigen der Justiermittel 62 kann somit der Abstand der beiden Rahmenprofile 40 verändert werden. Die Justiermittel 62 sind in der dargestellten Ausführungsform als Justierschrauben ausgeführt. Durch die Justiermittel 62 können die Rahmenprofile 40 insbesondere gegenüber der Montagebasis 98 in der Querrichtung 108 bewegt werden.

Oberhalb des Membranelements 12 und beabstandet zu diesem ist eine Abdeckhaube 80, insbesondere aus Leichtmetall, vorgesehen. Die Abdeckhaube 80 erstreckt sich zwischen dem Membranelement 12 und der zu verkleidenden Fläche 110, also einem oberen Bereich des Flugzeugrumpfes. Die Abdeckhaube 80 überdeckt eine Fläche, die größer ist als eine Fläche des Membranelements 12. Insbesondere ragt die Abdeckhaube 80 seitlich über das Membranelement 12 und die entlang der seitlichen Ränder des Membranelements 12 angeordneten Rahmenprofile 40 hinaus.

Insbesondere zum Ableiten von gegebenenfalls auftretendem Kondenswasser an einer Oberseite der Verkleidung 10 weist die Abdeckhaube 80 einen gewölbten oder gebogenen Querschnitt auf. Gegebenenfalls an einer Oberseite der Abdeckhaube 80 auftretendes Kondenswasser kann somit aufgrund der Wölbung der Abdeckhaube 80 seitlich abfließen, ohne mit dem Membranelement 12 in Kontakt zu kommen.

Weiterhin kann auch die Abdeckhaube 80 mehrere Haubensegmente 82 aufweisen, die zum Bilden der gesamten Haube 80 miteinander verbunden sind. Eine Möglichkeit der Verbindung der einzelnen Haubensegmente 82 miteinander besteht darin, dass an den entsprechenden stirnseitigen Randbereichen der einzelnen Haubensegmente 82 Aufkantungen 84 vorgesehen sind, wobei jeweils eine Aufkantung eines Haubensegments 82 eine Aufkantung eines benachbarten Haubensegments 82 hinter- oder umgreift. Hierzu kann beispielsweise jeweils eine der Aufkantungen 84 U-förmig gestaltet sein.

Zur Versteifung der Abdeckhaube 80 können Versteifungselemente 86 vorgesehen sein, die sich insbesondere in Querrichtung 108 der Abdeckhaube 80 erstrecken können.

Die Abdeckhaube 80 kann an einer dem Membranelement 12 zugewandten Unter- oder Innenseite eine Mehrzahl von Leuchtmitteln 88, beispielsweise Leuchtdioden, aufweisen, wie beispielsweise in den Figuren 1, 3 und 4 gezeigt. Die Leuchtmittel 88 strahlen Licht in Richtung des Membranelements 12 beziehungsweise der Membran 14, an welcher das Licht gestreut wird. Die Membran 14 kann hierzu aus einem lichttechnischen Gewebe hergestellt sein. Alternativ können auch an den Randbereichen der Verkleidung, insbesondere an den Rahmenprofilen 40, Leuchtmittel 88 vorgesehen sein, wie in Fig. 2 dargestellt. Zum Reflektieren des auf diese Weise seitlich eingestrahlten Lichts weist die Abdeckhaube an ihrer Unter- oder Innenseite einen Reflektor 90 auf.

Die Abdeckhaube 80 ist über Befestigungselemente, welche in der dargestellten Ausführungsform durch Verbindungsklammern 48 gebildet sind, an den Rahmenprofilen 40 befestigt. Die Verbindungsklammern 48 können an die Abdeckhaube 80 angeschraubt, angenietet oder angeklebt sein. Die Rahmenprofile 40 können für eine einfache Montierbarkeit mittels einer lösbaren Rastverbindung mit den Verbindungsklammern 48 verbunden sein.

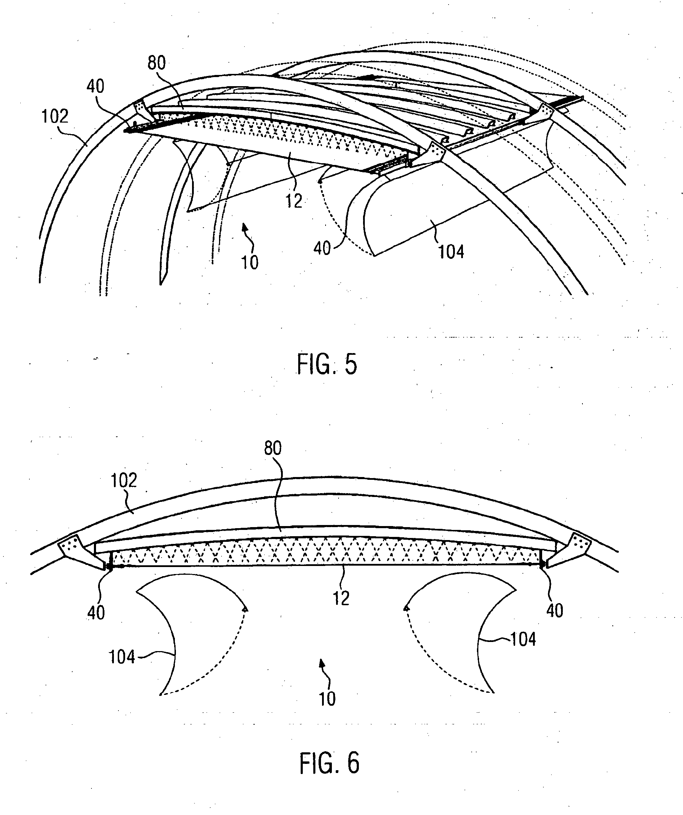

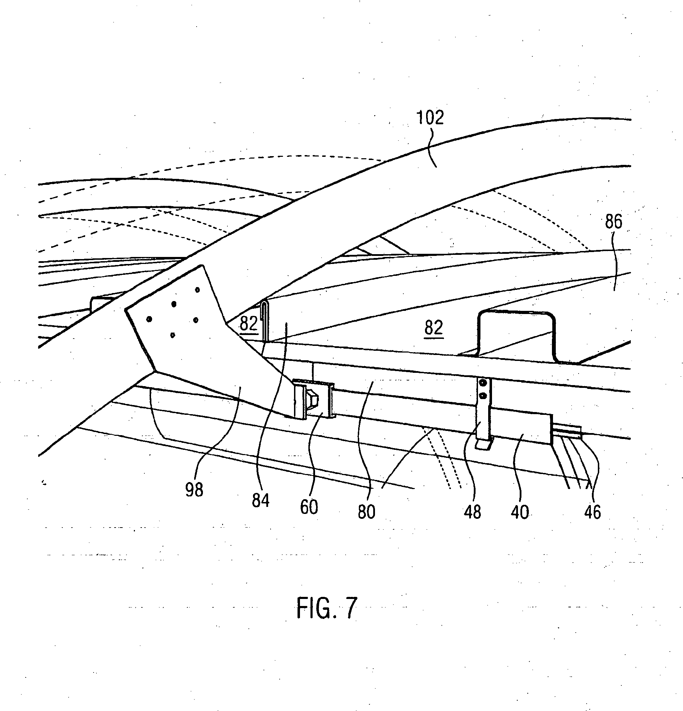

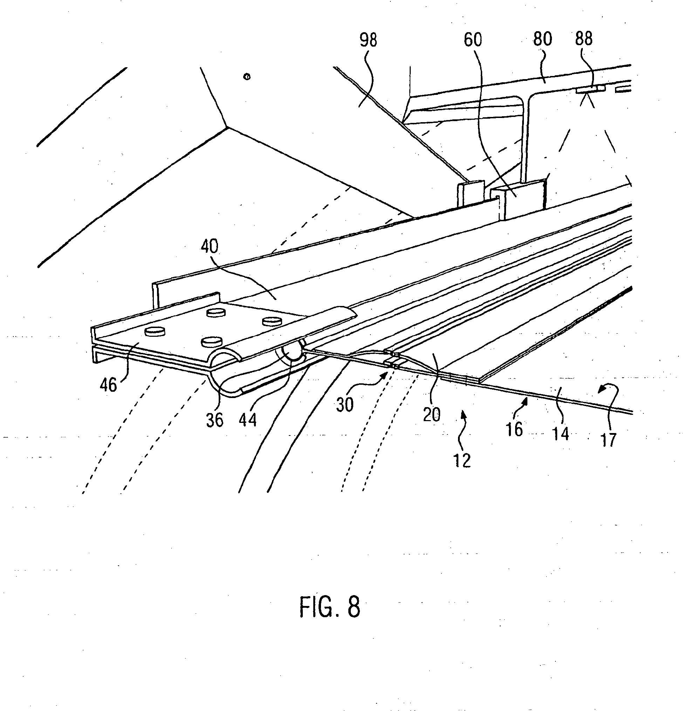

Eine zweite Ausführungsform einer erfindungsgemäßen Verkleidung 10 ist in den Figuren 5 bis 8 dargestellt. Die zweite Ausführungsform unterscheidet sich von der ersten Ausführungsform dadurch, dass die Verkleidung 10 nicht an Auflagerpunkten im Innenraum des Flugzeugs oberhalb der Gepäckfächer 104, sondern an dem Flugzeugrumpf selbst befestigt ist. Die Verkleidung 10 kann insbesondere an den Spanten 102 eines Flugzeugs befestigt werden. Hierzu sind C-förmige Halteelemente vorgesehen, die eine Montagebasis 98 für die Verkleidung 10 bilden. Die Rahmenprofile 40 sind, wie im Zusammenhang mit den Figuren 1 bis 4 beschrieben, gegenüber der Montagebasis 98 beweglich.

Das Membranelement 12 ist vorzugsweise einstückig ausgeführt und wird als Einheit mit seinen Kedern in die Kedernuten der Rahmenprofile 40 eingefädelt. Im Gegensatz zu den Rahmenprofilen 40 und der Abdeckhaube 80 ist das Membranelement 12 somit vorzugsweise nicht segmentiert.

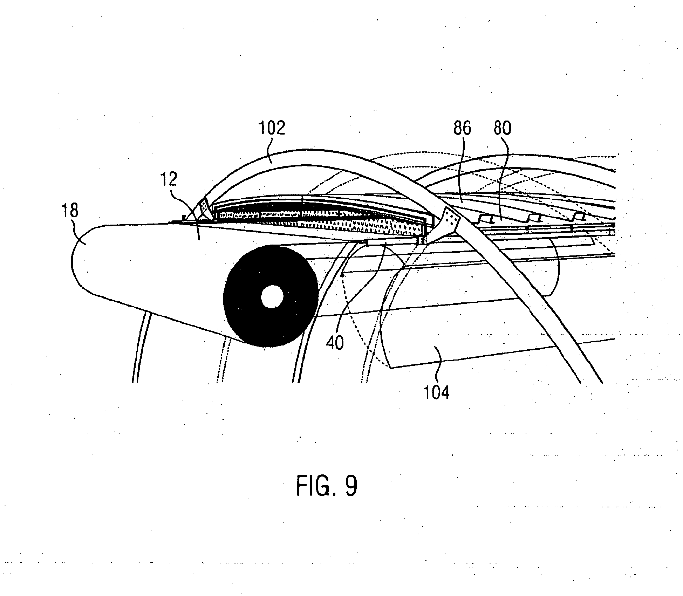

Insbesondere, wenn die Membran 14 durch die vorgesehenen Reißverschlüsse 30 nicht vollständig von den Kedern 36 entfernt werden kann, ist es von Vorteil, das Membranelement 12, wie in Fig. 9 gezeigt, auf eine Rolle 18 aufzurollen, um ein einfaches Entfernen und Einfädeln des Membranelements 12 zu ermöglichen.

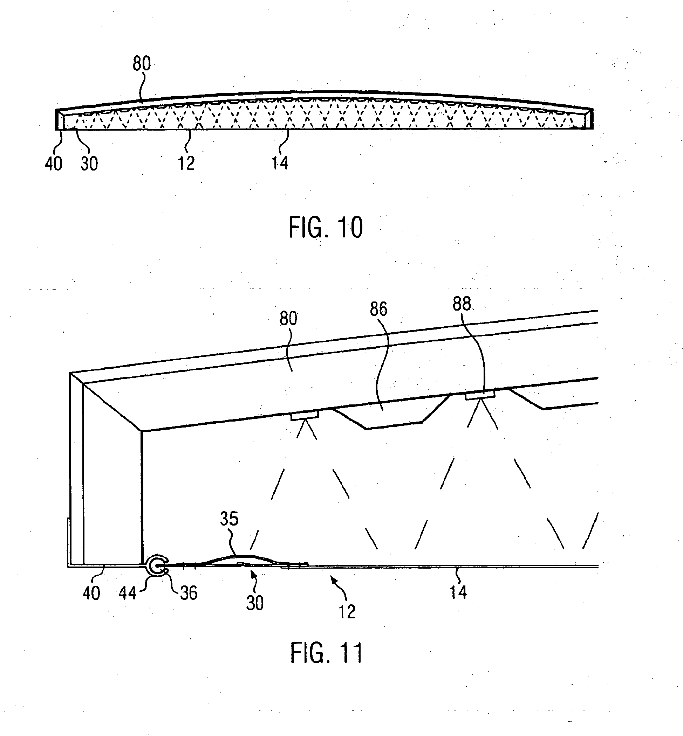

Ein drittes Beispiel einer erfindungsgemäßen Verkleidung 10 ist in den Figuren 10 und 11 dargestellt. Im Unterschied zu den ersten beiden Ausführungsformen werden bei dieser Variante Spannkräfte, welche von dem Membranelement 12 auf die seitlichen Rahmenprofile 40 übertragen werden, unmittelbar in die Abdeckhaube 80 eingeleitet. Die Rahmenprofile 40 sind hierzu fest mit der Abdeckhaube 80 verbunden. Die Abdeckhaube 80 ist zur Aufnahme der Spannkräfte besonders steif ausgeführt.

Bei dieser Ausgestaltung kann die Abdeckhaube 80 als ganzes Element ein- und ausgebaut werden. Um die erforderliche Steifigkeit zu erzielen, können an der Abdeckhaube 80 Versteifungselemente 86 oder Rippen vorgesehen sein, welche die Spannkräfte aus dem Membranelement 12 zumindest teilweise, vorzugsweise vollständig, aufnehmen können. Der Raumabschluss der Abdeckhaube 80 und der Zusammenhalt der Rippen können durch eine dünne, zylindrische Schale gewährleistet werden. Die Schale kann beispielsweise aus Blech mit Versteifungsrippen ausgeführt sein.

Fig. 11 zeigt zudem eine Ausgestaltung des Reißverschlusses mit einem Verbindungsstreifen 35.

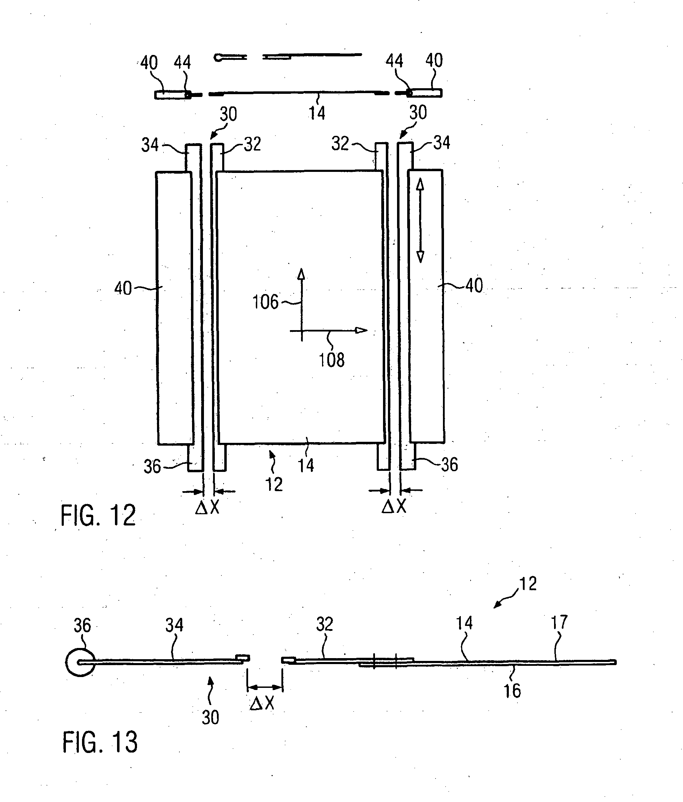

In den Figuren 12 bis 18 sind Details des Membranelements 12 und des Spannvorgangs dargestellt.

Fig. 12 zeigt ein Membranelement 12 mit einer Membran 14 und zwei Reißverschlüssen 30, welche jeweils offen sind. Die Reißverschlüsse 30 umfassen jeweils ein erstes Verschlussband 32 und ein zweites Verschlussband 34. Das erste Verschlussband 32 ist an die Membran 14 angeschweißt oder angenäht. Das zweite Verschlussband 34 umfasst einen Keder 36, welcher in eine Kedernut eines Rahmenprofils 40 eingeführt ist.

Die Membran 14 befindet sich in einem ungespannten Zustand, wobei zwischen den ersten Verschlussbändern 32 und den zweiten Verschlussbändern 34 jeweils eine Klaffung Δx besteht. Eine Querschnittsansicht des Reißverschlusses 30 ist in Fig. 13 dargestellt. Das zweite Verschlussband 34 des Reißverschlusses 30 ist in den Keder 36 eingebettet und mit diesem fest und formschlüssig verbunden.

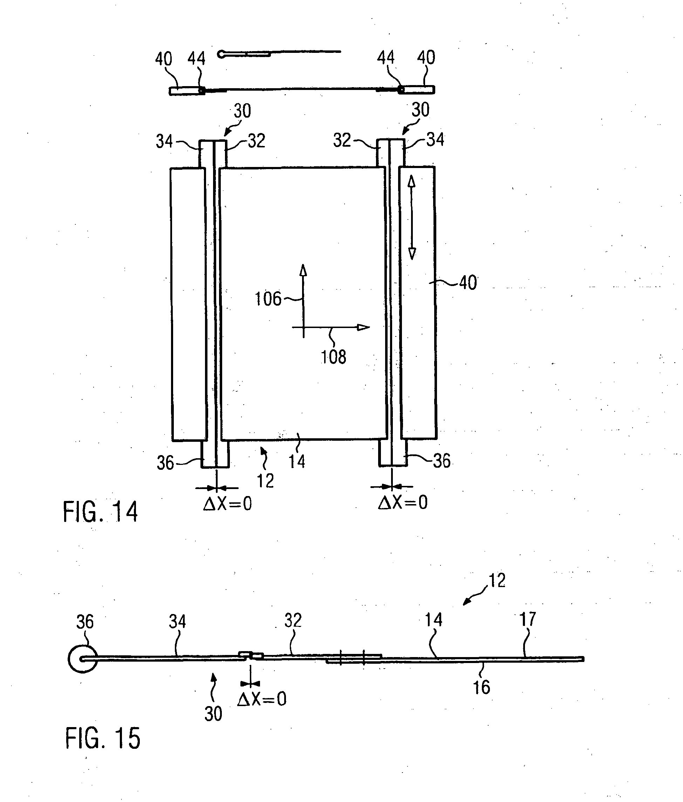

In Fig. 14 ist die Membran 14 in einem gespannten Zustand dargestellt. Die Reißverschlüsse 30 sind hierzu geschlossen und es besteht keine Klaffung mehr. Die Membran 14 ist in Querrichtung 108 gespannt. In Längsrichtung 106 ist die Membran 14 trotz des gespannten Zustands weiterhin entlang der Rahmenprofile 40 verschiebbar. Die Keder 36 sind mit anderen Worten in den Kedernuten 44 axial verschiebbar. Eine Querschnittsansicht des Reißverschlusses 30 im geschlossenen Zustand ist in Fig. 15 dargestellt.

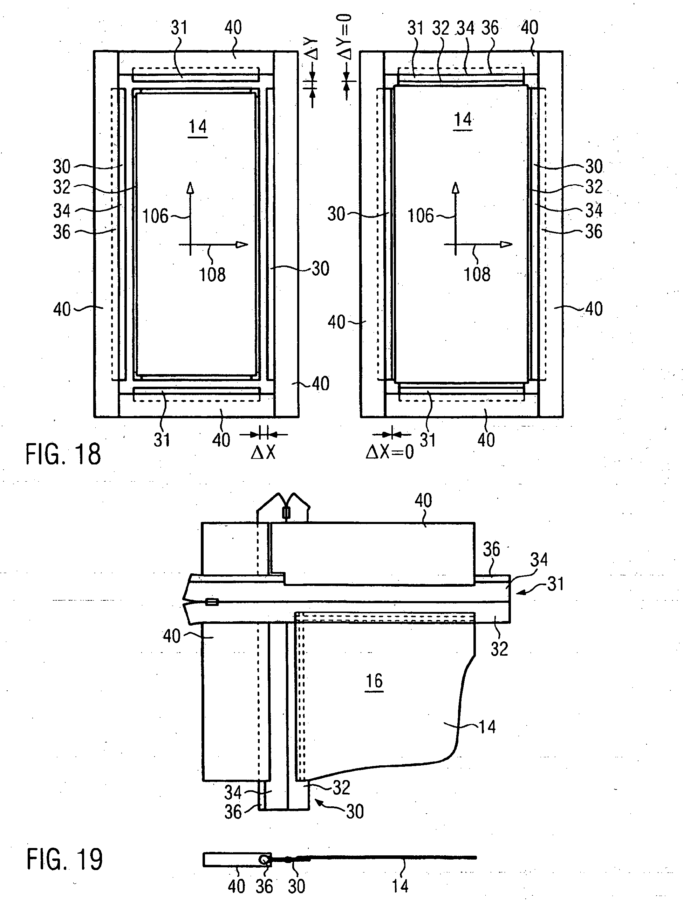

Fig. 18 zeigt Details eines zweiachsig spannbaren Membranelements 12. In der linken Darstellung der Fig. 18 ist das Membranelement 12 in einem ungespannten Zustand dargestellt. Das Membranelement 12 umfasst an beiden Längsseiten jeweils einen Reißverschluss 30 und an beiden Querseiten jeweils einen Reißverschluss 31. Wie auch die Reißverschlüsse 30 weisen die Reißverschlüsse 31 jeweils ein erstes und ein zweites Verschlussband 32, 34 auf. Die Reißverschlüsse 30, 31 sind in der linken Darstellung der Fig. 18 geöffnet. Zum Spannen des Membranelements 12 werden die Reißverschlüsse 30, 31 geschlossen, wie in der rechten Darstellung der Fig. 18 gezeigt.

Das Membranelement 12 umfasst eine Sichtseite 16 und eine Rückseite 17. Die Reißverschlüsse 20, 30, 31 sind jeweils an der Rückseite 17 an der Membran 14 angebracht, wie insbesondere in den Figuren 13, 15 bis 17 und 19 dargestellt.

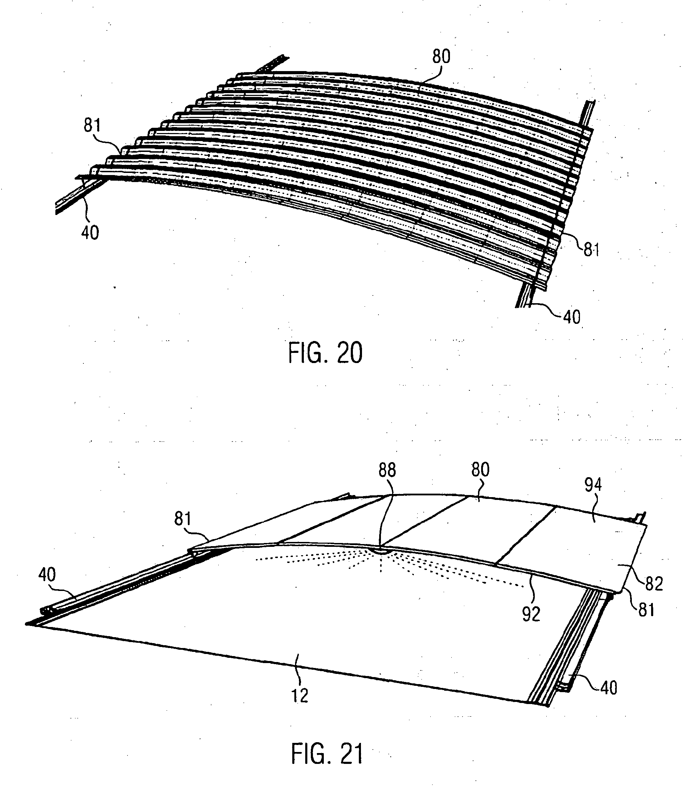

Fig. 20 zeigt eine Abdeckhaube 80 mit einem in Querrichtung gewölbten Blech, beispielsweise aus Aluminium. Zum kontrollierten, seitlichen Ableiten des Kondenswassers ist das Blech als, insbesondere trapezförmig, gewelltes oder geripptes Blech ausgeführt. Das Wasser kann über Wellentäler in dem Blech zu den Seiten der Abdeckhaube 80 abgeleitet werden, wo es an überstehenden Abtropfkanten 81 von dem Membranelement 12 ferngehalten wird. Bei einer nicht horizontalen Fluglage, wie etwa beim Start, verhindern die Wellentäler einen Wasserfluss in Längsrichtung des Flugzeugs. An der Unterseite des Bleches, vorzugsweise in den Wellenbergen, können Leuchtmittel 88 angeordnet sein. Die Flanken der Wellenberge können als lichtverteilende Reflektoren 90 dienen.

Fig. 21 zeigt eine Abdeckhaube 80 einer nicht beanspruchten Verkleidung mit einem formstabilen Rahmen 92, beispielsweise aus Aluminium, auf den eine vorzugsweise wasserdichte Folie 94 oder ein wasserdichtes Gewebe aufgespannt ist. Der Rahmen 92 ist quer zur Längsachse nach oben gebogen. Die Seitenränder sind so gestaltet, dass sich eine Abtropfkante 81 ausbildet. Die Ableitung des Wassers erfolgt durch seitlichen Wasserabfluss. Zwischen einzelnen Haubensegmenten 82 sind Abdichtungen vorgesehen.

Die erfindungsgemäße Verkleidung bildet ein integriertes Deckensystem, das beispielsweise direkt an den Spanten eines Flugzeugrumpfes oder an Halterungen für bisher verwendete Deckenelemente befestigt werden kann. Durch die erfindungsgemäße Verkleidung wird ein optisch ansprechender Abschluss eines Raumes geschaffen, welcher durch die Abdeckhaube zuverlässig geschützt wird. Die Verkleidung kann einfach ein- und ausgebaut werden kann und bietet durch die starre Abdeckhaube eine hohe Funktionalität. Durch den erfindungsgemäßen Doppelreißverschluss mit Keder kann der Spannvorgang erleichtert und ein einfacher Zugang, beispielsweise zu Revisionszwecken, zu der Abdeckhaube bereitgestellt werden.

## Patentansprüche

1. Verkleidung für Flächen, insbesondere Decken oder Wände, insbesondere in Passagierflugzeugen,
- mit mindestens zwei Rahmenprofilen (40), welche sich entlang einer Längsrichtung (106) an der zu verkleidenden Fläche (110) beabstandet zueinander erstrecken,
- mit mindestens einem Membranelement (12) mit einer Sichtseite (16) und einer der Sichtseite (16) abgewandten Rückseite (17), das zwischen den Rahmenprofilen (40) angeordnet und mit den Rahmenprofilen (40) mindestens teilweise mit Hilfe von hintergreifenden Verbindungsmitteln verbünden ist, wobei das Membranelement (12) in einem ungespannten Zustand entlang der Längsrichtung (106) frei bewegbar, insbesondere frei in einen Zwischenraum zwischen die Rahmenprofile (40) einführbar und aus diesem entfernbar ist, und
- mit Mitteln zum Spannen des Membranelements (12) in einer Querrichtung (108) zwischen den Rahmenprofilen (40),
- wobei zum Schutz des Membranelements (12) an der Rückseite (17) mindestens eine formstabile Abdeckhaube (80) angeordnet ist, welche zum Ableiten von gegebenenfalls an einer Oberseite der Verkleidung (10) auftretendem Kondenswasser einen gewölbten oder gebogenen Querschnitt aufweist,
**dadurch gekennzeichnet,**
- **dass** die Abdeckhaube (80) eine Fläche überdeckt, die größer ist als eine Fläche des Membranelements (12) und seitlich über das Membranelement (12) hinausragt und
- **dass** die Abdeckhaube (80) ein gewelltes Blech aufweist, um Kondenswasser über Wellentäler in dem Blech zu den Seiten der Abdeckhaube (80) abzuleiten.

2. Verkleidung nach Anspruch 1,
**dadurch gekennzeichnet,**
**dass** die Abdeckhaube (80) mindestens ein Leuchtmittel (88) aufweist.

3. Verkleidung nach Anspruch 1 oder 2,
**dadurch gekennzeichnet,**
**dass** die Abdeckhaube (80) mindestens einen Reflektor aufweist.

4. Verkleidung nach einem der Ansprüche 1 bis 3,
**dadurch gekennzeichnet,**
**dass** die Abdeckhaube (80) mindestens einen Kühlkörper aufweist,

5. Verkleidung nach einem der Ansprüche 1 bis 4,
**dadurch gekennzeichnet,**
**dass** die Abdeckhaube (80) eine schallabsorbierende Beschichtung aufweist.

6. Verkleidung nach einem der Ansprüche 1 bis 5,
**dadurch gekennzeichnet,**
**dass** die hintergreifenden Verbindungsmittel durch eine Kederverbindung gebildet sind.

7. Verkleidung nach einem der Ansprüche 1 bis 6,
**dadurch gekennzeichnet,**
**dass** die Abdeckhaube (80) an den Rahmenprofilen (40) befestigt ist.

8. Verkleidung nach einem der Ansprüche 1 bis 7,
**dadurch gekennzeichnet,**
**dass** Befestigungselemente (60) vorhanden sind, mit welchen die Rahmenprofile (40) an einer Montagebasis (98) befestigbar sind.

9. Verkleidung nach Anspruch 8,
**dadurch gekennzeichnet,**
**dass** Spannkräfte, welche von dem gespannten Membranelement (12) auf die Rahmenprofile (40) übertragen werden, über die Befestigungselemente (60) in die Montagebasis (98) einleitbar sind.

10. Verkleidung nach einem der Ansprüche 1 bis 9,
**dadurch gekennzeichnet,**
**dass** Spannkräfte, welche von dem gespannten Membranelement (12) auf die Rahmenprofile (40) übertragen werden, in die Abdeckhaube (80) einleitbar sind.

11. Verkleidung nach einem der Ansprüche 1 bis 10,
**dadurch gekennzeichnet,**
**dass** die Abdeckhaube (80) mehrere Haubensegmente (82) umfasst, die insbesondere formschlüssig, miteinander verbunden sind.

12. Verkleidung nach einem der Ansprüche 1 bis 11,
**dadurch gekennzeichnet,**
**dass** die Rahmenprofile (40) jeweils mehrere Profilsegmente (42) aufweisen, die, insbesondere im Bereich eines Momenten-Nullpunkts der Rahmenprofile (40), miteinander verbunden sind.

13. Verkleidung nach einem der Ansprüche 1 bis 12,
**dadurch gekennzeichnet,**
**dass** das Membranelement (12) als Mittel zum Spannen mindestens einen Reißverschluss (30) aufweist, welcher sich entlang der Längsrichtung (106) erstreckt, und
**dass** das Membranelement (12) Durch Schließen des Reißverschlusses (30) von dem ungespannten Zustand in einen in Querrichtung (108) gespannten Zustand und durch Öffnen des Reißverschlusses (30) von einem in Querrichtung (108) gespannten Zustand in den ungespannten Zustand überführbar ist.

14. Verkleidung nach Anspruch 13,
**dadurch gekennzeichnet,**
**dass** um den Reißverschluss (30) herum ein Verbindungsstreifen (35) angeordnet ist, durch welchen bei geöffnetem Reißverschluss (30) eine Klaffung des Reißverschlusses (30) begrenzt wird.

15. Verkleidung nach einem der Ansprüche 1 bis 14,
**dadurch gekennzeichnet,**
**dass** mindestens zwei Reißverschlüsse (20, 30) vorgegehen sind, wobei die Reißverschlüsse (20, 30) so zueinander angeordnet sind, dass durch Schließen eines ersten Reißverschlusses (20) ein vorgespannter Zustand und durch anschließendes Schließen des zweiten Reißverschlusses (30) der gespannte Zustand des Membranelements (12) einstellbar ist.

16. Verkleidung nach einem der Ansprüche 1 bis 15,
**dadurch gekennzeichnet,**
**dass** die Mittel zum Spannen des Membranelements (12) mindestens ein Justiermittel (62) aufweisen, mit welchem mindestens eines der Rahmenprofile (40) in der Querrichtung (108) verschiebbar ist.

17. Verkleidung nach einem der Ansprüche 1 bis 16,
**dadurch gekennzeichnet,**
**dass** das gewellte Blech der Abdeckhaube (80) oder ein Rahmen (92) der Abdeckhaube (80) mit einer Folie (94) bespannt ist.

## Claims

1. A lining for surfaces, more particularly ceilings or walls, especially in passenger aircraft, comprising
- at least two profiled frame elements (40) extending in a longitudinal direction (106) along the surface (110) to be covered in spaced relationship to each other,
- at least one membrane element (12) having a face side (16) and a reverse side (17) remote from the face side (16) and disposed between said profiled frame elements (40) and connected to said profiled frame elements (40), at least partially, by means of attachment means that engage from behind wherein said membrane element (12), when in a loose state, is capable of moving freely in said longitudinal direction (106) and, in particular, is free to move into and out of an interstice between said profiled frame elements (40), and
- means adapted to taughten said membrane element (12) in a transverse direction (108) between said profiled frame elements (40),
- wherein at least one dimensionally stable protective cover (80) is provided on said reverse side (17) for protection of said membrane element (12) and which has a corrugated or bent cross section for discharging of condensed water developed on the surface of the lining (10) as the case may be
**characterized**
- **in that** the protective cover (80) covers a surface, which is greater than one surface of the membrane element (12) and projects laterally beyond the membrane element (12) and
- **in that** the protective cover (80) has a waved sheet of metal for discharging of condensed water via wave troughs in the sheet of metal to the sides of the protective cover (80).

2. The lining according to claim 1,
**characterized in that**
said protective cover (80) has at least one illuminant (88).

3. The lining as defined in claim 1 or claim 2,
**characterized in that**
said protective cover (80) has at least one reflector.

4. The lining according to any one of claims 1 to 3,
**characterized in that**
said protective cover (80) has at least one heat sink.

5. The lining according to any one of claims 1 to 4,
**characterized in that**
said protective cover (80) has a sound-absorbing coating.

6. The lining according to any one of claims 1 to 5,
**characterized in that**
said rearwardly engaging attachment means are formed by a keder joint.

7. The lining according to any one of claims 1 to 6,
**characterized in that**
said protective cover (80) is fixed to said profiled frame elements (40).

8. The lining according to any one of claims 1 to 7,
**characterized in that**
securing elements (60) are present, by means of which said profiled frame elements (40) can be attached to an assembly base (98).

9. The lining according to claim 8,
**characterized in that**
tension forces that are transferred from the stretched membrane element (12) to said profiled frame elements (40) can be absorbed by said assembly base (98) via said securing elements (60).

10. The lining according to any one of claims 1 to 9,
**characterized in that**
tension forces that are transferred from the stretched membrane element (12) to said profiled frame elements (40) can be absorbed by said protective cover (80).

11. The lining according to any one of claims 1 to 10,
**characterized in that**
said protective cover (80) has a plurality of cover segments (82) which, in particular, are positively attached to each other.

12. The lining according to any one of claims 1 to 11,
**characterized in that**
said profiled frame elements (40) each have a plurality of profiled segments (42) that are bonded to each other, particularly in the region of a moment zero point of said profiled frame elements (40).

13. The lining according to any one of claims 1 to 12,
**characterized**
**in that** said membrane element (12) has, as taughtening means, at least one zip fastener (30) extending in said longitudinal direction (106) and
**in that** said membrane element (12) can be changed from a loose state to a state in which it is taughtened in said transverse direction (108) by closing said zip fastener (30) and from a state in which it is taughtened in said transverse direction (108) to a loose state by opening said zip fastener (30).

14. The lining according to claim 13,
**characterized in that**
a bridging strap (35) is disposed across said zip fastener (30), by means of which a gap formed by said zip fastener (30) is restricted when said zip fastener (30) is in the open state.

15. The lining according to any one of claims 1 to 14,
**characterized in that**
at least two zip fasteners (20, 30) are provided, which zip fasteners (20, 30) are arranged one to the other such that closing of a first zip fastener (20) produces a pretensioned state of said membrane element (12) and subsequent closing of the second zip fastener (30) causes the taughtened state.

16. The lining according to any one of claims 1 to 15,
**characterized in that**
said means for taughtening said membrane element (12) comprise at least one adjusting means (62) with which at least one of the profiled frame elements (40) can be displaced in the transverse direction (108).

17. The lining according to any one of claims 1 to 16,
**characterized in that**
the corrugated sheet of metal of the protective cover (80) or a frame (92) of the protective cover (80) is covered with a foil (94).

## Revendications

1. Revêtement pour des surfaces, notamment pour des plafonds ou des murs, en particulier dans des avions pour passagers,
- avec au moins deux profilés d'armature (40), qui s'étendent contre la surface à revêtir (110) le long d'une direction longitudinale (106) en étant espacés l'un par rapport à l'autre,
- avec au moins un élément de membrane (12) qui a un côté visible (16) et un côté arrière (17) opposé au côté visible (16), et qui est disposé entre les profilés d'armature (40) et est relié aux profilés d'armature (40) au moins en partie à l'aide de moyens de fixation par accrochage par l'arrière, l'élément de membrane (12) pouvant, dans un état non tendu, être déplacé librement le long de la direction longitudinale (106), et pouvant notamment être engagé librement dans un espace situé entre les profilés d'armature (40) et pouvant être dégagé de celui-ci, et
- avec des moyens de tension de l'élément de membrane (12) entre les profilés d'armature (40) dans une direction transversale (108),
- au moins un capot de couverture non déformable (80) étant disposé contre le côté arrière (17) pour la protection de l'élément de membrane (12) et comprenant, pour l'évacuation de l'eau de condensation apparaissant le cas échéant contre une face supérieure du revêtement (10), une section transversale bombée ou courbée,
**caractérisé :**
- **en ce que** le capot de couverture (80) recouvre une surface qui est plus grande qu'une surface de l'élément de membrane (12) et dépasse latéralement au-dessus de l'élément de membrane (12), et
- **en ce que** le capot de couverture (80) comprend une tôle ondulée, pour évacuer vers les côtés du capot de couverture (80) l'eau de condensation présente dans des creux d'ondulation de la tôle.

2. Revêtement selon la revendication 1,
**caractérisé :**
**en ce que** le capot de couverture (80) comprend au moins un moyen d'éclairage (88).

3. Revêtement selon la revendication 1 ou 2,
**caractérisé :**
**en ce que** le capot de couverture (80) comprend au moins un réflecteur.

4. Revêtement selon une des revendications 1 à 3,
**caractérisé :**
**en ce que** le capot de couverture (80) comprend au moins un organe radiateur.

5. Revêtement selon une des revendications 1 à 4,
**caractérisé :**
**en ce que** le capot de couverture (80) comprend un revêtement insonorisant.

6. Revêtement selon une des revendications 1 à 5,
**caractérisé :**
**en ce que** les moyens de fixation par accrochage par l'arrière sont constitués sous la forme d'une liaison par bourrelet.

7. Revêtement selon une des revendications 1 à 6,
**caractérisé :**
**en ce que** le capot de couverture (80) est fixé aux profilés d'armature (40).

8. Revêtement selon une des revendications 1 à 7,
**caractérisé :**
**en ce que** des éléments de fixation (60) sont prévus, avec lesquels les profilés d'armature (40) peuvent être fixés sur une base de support (98).

9. Revêtement selon la revendication 8,
**caractérisé :**
**en ce que** des forces de tension, qui sont transmises de l'élément de membrane (12) tendu aux profilés d'armature (40), peuvent être appliquées aux éléments de fixation (60) dans la base de support (98).

10. Revêtement selon une des revendications 1 à 9,
**caractérisé :**
**en ce que** des forces de tension, qui sont transmises de l'élément de membrane (12) tendu aux profilés d'armature (40), peuvent être appliquées au capot de couverture (80).

11. Revêtement selon une des revendications 1 à 10,
**caractérisé :**
**en ce que** le capot de couverture (80) comporte plusieurs segments de capot (82) qui sont reliés les uns aux autres, en particulier par emboîtage de forme.

12. Revêtement selon une des revendications 1 à 11,
**caractérisé :**
**en ce que** les profilés d'armature (40) comprennent chacun plusieurs segments de profilé (42) qui, en particulier dans la zone de point de couple nul des profilés d'armature (40), sont reliés les uns aux autres.

13. Revêtement selon une des revendications 1 à 12,
**caractérisé :**
**en ce que** l'élément de membrane (12) comprend, comme moyen de tension, au moins une fermeture à glissière (30), qui s'étend le long de la direction longitudinale (106), et
**en ce que** l'élément de membrane (12) peut, par la fermeture de la fermeture à glissière (30), être transféré de l'état non tendu dans un état tendu dans une direction transversale (108) et, par l'ouverture de la fermeture à glissière (30), être transféré d'un état tendu dans une direction transversale (108) dans l'état non tendu.

14. Revêtement selon la revendication 13,
**caractérisé :**
**en ce qu'**est disposée, autour de la fermeture à glissière (30), une bande de liaison (35) au moyen de laquelle, lorsque la fermeture à glissière (30) est ouverte, on limite un écart de la fermeture à glissière (30).

15. Revêtement selon une des revendications 1 à 14,
**caractérisé :**
**en ce qu'**au moins deux fermetures à glissière (20, 30) sont prévues, les fermetures à glissière (20, 30) étant disposées l'une par rapport à l'autre de telle manière qu'un état de prétension peut être obtenu par la fermeture d'une première fermeture à glissière (20), puis, par la fermeture subséquente de la deuxième fermeture à glissière (30), l'état tendu de l'élément de membrane (12) peut être obtenu.

16. Revêtement selon une des revendications 1 à 15,
**caractérisé :**
**en ce que** les moyens de tension de l'élément de membrane (12) comprennent au moins un moyen d'ajustement (62), avec lequel au moins l'un des profilés d'armature (40) est mobile dans la direction transversale (108).

17. Revêtement selon une des revendications 1 à 16,
**caractérisé :**
**en ce que** la tôle ondulée du capot de couverture (80) ou un panneau (92) du capot de couverture (80) est tapissé avec une feuille (94).
